# DEMANDE DE BREVET EUROPEEN

(11) **EP 4 606 658 A1**
(43) Date de publication de la demande: **27.08.2025**
(21) Numéro de dépôt: 25156457.1
(22) Date de dépôt: 07.02.2025
(51) Int. Cl.: B60S 3/04

(54) **INSTALLATION DE LAVAGE ET/OU DE DÉSINFECTION DE VÉHICULES**

(30) Priorité: 23.02.2024 FR 2401778
(71) Demandeur: Servi Loire Industrie, 44150 Ancenis-Saint-Gereon (FR)
(72) Inventeur: JAHAN, Alain, 44150 ANCENIS SAINT-GEREON (FR)
(74) Mandataire: Lequien, Philippe

(57) **Abrégé**

L'invention concerne une installation (1) de lavage et/ou de désinfection d'un bas de caisse et des roues d'un véhicule (2), en particulier d'un camion, comprenant :
- deux parois latérales (4) délimitant un couloir de passage du véhicule ;
- des buses de pulvérisation (61) d'un liquide de lavage et/ou de désinfection portées par les deux parois latérales (4) et positionnées pour pulvériser le liquide de lavage et/ou de désinfection en direction du bas de caisse et des roues du véhicule ;
- un fond (3) à partir duquel s'étendent les deux parois latérales (4), pourvu d'un système de récupération du liquide de lavage et/ou de désinfection

## Description

### Domaine Technique

Le domaine de l'invention est celui de la conception et de la fabrication d'une installation de lavage et/ou de désinfection de véhicules routiers et de chantiers de travaux publics, notamment de camions et d'engins de chantier.

### État de la technique

Du domaine de l'invention, il est connu des installations de lavage et/ou de désinfection de véhicules qui sont fixes. Ces installations comprennent classiquement des buses de pulvérisation d'un liquide de lavage et/ou de désinfection portées par un support, des grilles sur lesquelles le véhicule ou une partie du véhicule est situé pour y être lavé, et des moyens de récupération du liquide de lavage pulvérisé.

On connaît également des installations transportables telle que celle décrite dans le document de brevet publié sous le numéro FR2858286B1.

Cette installation permet un lavage et/ou de désinfection d'un bas de caisse et des roues d'un véhicule routier, en particulier d'un camion. L'installation comprend :
- deux parois latérales délimitant un couloir de passage du véhicule routier ;
- des buses de pulvérisation d'un liquide de lavage et/ou de désinfection portées par les deux parois latérales et positionnées pour pulvériser le liquide de lavage et/ou de désinfection en direction du bas de caisse et des roues du véhicule routier,
- un fond à partir duquel s'étendent les deux parois latérales, pourvu d'un système de récupération du liquide de lavage et/ou de désinfection,

Lors de l'utilisation de ces installations plusieurs problématiques peuvent être constatées.

Tout d'abord, le chauffeur du véhicule routier peut être confronté à un mur de brume résultant de l'aspersion des liquides de lavage et/ou de désinfection. Il en résulte une appréhension pour faire avancer le véhicule routier, et des difficultés à positionner rapidement ou correctement le véhicule routier dans l'installation.

De plus, le lavage du bas de caisse et des roues peut être considéré comme salissant pour l'environnement de l'installation et pour les autres parties du véhicule routier, vis-à-vis du dépôt de particules en suspensions formant la brume produite par le lavage et de projection de salissures.

Enfin, ces installations entraînent une forte consommation d'eau.

### Problème technique

L'invention a notamment pour objectif de pallier à ces inconvénients de l'art antérieur.

Plus précisément, l'invention a pour objectif de proposer une installation qui minimise ou empêche la création d'un mur de brume.

L'invention a également pour objectif de fournir une telle installation qui limite la pollution de l'environnement de l'installation ou des autres parties du véhicule qui ne sont pas nettoyées.

L'invention a encore pour objectif de fournir une telle installation qui permette de réaliser des économies d'eau.

### Résumé de l'invention

Ces objectifs, ainsi que d'autres qui apparaîtront par la suite, sont atteints grâce à l'invention qui a pour objet une installation de lavage et/ou de désinfection d'un bas de caisse et des roues d'un véhicule, en particulier d'un camion, comprenant :
- deux parois latérales délimitant un couloir de passage du véhicule;
- des buses de pulvérisation d'un liquide de lavage et/ou de désinfection portées par les deux parois latérales et positionnées pour pulvériser le liquide de lavage et/ou de désinfection en direction du bas de caisse et des roues du véhicule,
- un fond à partir duquel s'étendent les deux parois latérales, pourvu d'un système de récupération du liquide de lavage et/ou de désinfection,
caractérisée en ce que chaque paroi latérale porte :
- un carter supérieur surplombant de façon continue les buses de pulvérisation et s'étendant en hauteur au voisinage de celles-ci,
- deux carters d'extrémité, chacun s'étendant vers le bas à partir d'une extrémité du carter supérieur ;
et en ce qu'au moins l'extrémité distale des carters, destinée à s'approcher ou à toucher le véhicule, est en matériau déformable.

L'installation selon l'invention permet de diminuer voire d'empêcher la création d'un mur de brume.

De ce fait, elle limite la pollution de l'environnement de l'installation et des autres parties du véhicule qui ne sont pas concernées par le lavage.

En effet, les carters supérieurs et les carters d'extrémité limitent la propagation des gouttelettes d'eau en suspension dans l'air vers le haut, ainsi que vers l'avant et vers l'arrière par rapport aux zones sur lesquelles est pulvérisé le liquide de lavage et/ou de désinfection par les buses de pulvérisation.

Les carters supérieurs et les carters d'extrémité forment ainsi des moyens de confinement d'une brume d'eau susceptible d'être produite par les buses de pulvérisation.

La brume d'eau confinée par les carters se condense alors sur les faces internes des carters ou sur les parois latérales de l'installation ou du véhicule situées dans l'espace confiné pour s'écouler vers le fond.

Ceci permet en outre de réaliser des économies d'eau, grâce à la concentration de du liquide de lavage dans la zone confinée, et à sa récupération par le système de récupération.

Grâce à au moins l'extrémité distale des carters qui sont en matériau déformable, alors au moins l'extrémité distale des carters peut se déformer lorsque le véhicule arrive au contact cette extrémité distale. Ainsi, l'effet de confinement est renforcé.

En effet, les carters peuvent ainsi présenter une longueur telle que l'avancement du véhicule sur l'installation provoque la déformation des caractères et ainsi la formation d'une barrière continue entre les carters et le véhicule.

Selon une caractéristique préférée, le couloir de passage présente une largeur d'une valeur LP, et une largeur maximale d'empiétement par un véhicule d'une valeur LME, et en ce que les carters présentent une largeur d'élongation d'une valeur LE,
avec LME+2×LE ≥ LP.

De cette manière on optimise l'effet de minimisation de la création d'un mur de brume grâce à l'installation.

Préférentiellement, l'ensemble des carters est en matériau déformable.

Ainsi, il est évité une dégradation du véhicule qui vient au contact des carter, et il est optimisé la capacité des carters à réaliser un confinement latéral et supérieur lors de l'opération de lavage.

Selon une variante avantageuse, au moins une partie des carters prend la forme de brosses. Préférentiellement, l'ensemble des carter prend la forme de brosse.

De telles brosses forment une solution économique est particulièrement adapté pour établir le confinement nécessaire à éviter la création d'un mur de brume lors d'un lavage d'un véhicule.

Préférentiellement, le système de récupération comprend au moins un réceptacle surmonté par au moins un caillebotis.

Selon une caractéristique préférée, le système de récupération comprend au moins deux réceptacles prenant la forme d'une goulotte s'étendant longitudinalement sous une trajectoire de roue présentée par le fond.

Ces goulottes forment des moyens de récupération s'étendant longitudinalement parallèlement aux zones confinées par les carters. De cette manière, il est optimisé la collecte des eaux de lavage et/ou de désinfection.

Avantageusement, l'installation est transportable.

### Brève description des dessins

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique vue de face de l'installation de lavage et/ou de désinfection d'un bas de caisse et des roues d'un véhicule ;
- la figure 2 est une représentation schématique partielle, vue de côté, d'une coupe transversale passant par une goulotte d'un système de récupération de l'installation ;
- la figure 3 est une représentation schématique du détail III-III illustré sur la figure 2.

### Description détaillée

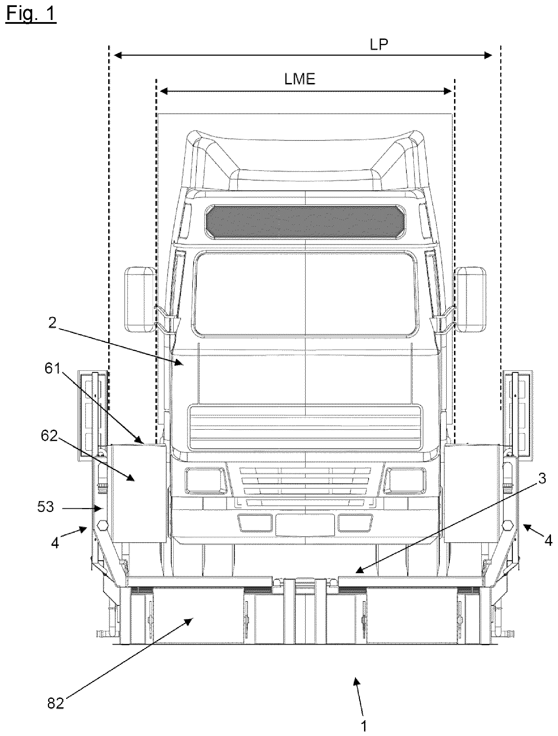

En référence à la figure 1, une installation 1 de lavage et/ou de désinfection est représentée.

Cette installation 1 est conçue pour permettre un lavage et/ou une désinfection d'un bas de caisse et des roues d'un véhicule 2.

En l'occurrence, le véhicule 2 représenté est un camion.

L'installation 1 comprend :
- un fond 3 ;
- deux parois latérales 4 s'étendant à partir du fond 3.

Le fond 3 présente une surface de roulement de forme rectangulaire.

Tel que cela apparaît par la suite, lors d'un lavage des eaux de lavage ruissèlent et tombent sur le fond 3.

Le fond 3 est ainsi pourvu d'un système de récupération du liquide de lavage et/ou de désinfection.

Ce système de récupération comprend au moins un réceptacle 81 surmonté par au moins un caillebotis 82.

Selon le présent mode de réalisation le système de récupération comprend deux réceptacles 81 prenant chacun la forme d'une goulotte s'étendant longitudinalement sous une trajectoire de roue présentée par le fond 3.

Les deux parois latérales 4 délimitent un couloir de passage du véhicule 2. Ce couloir de passage se situe au-dessus de la surface de roulement.

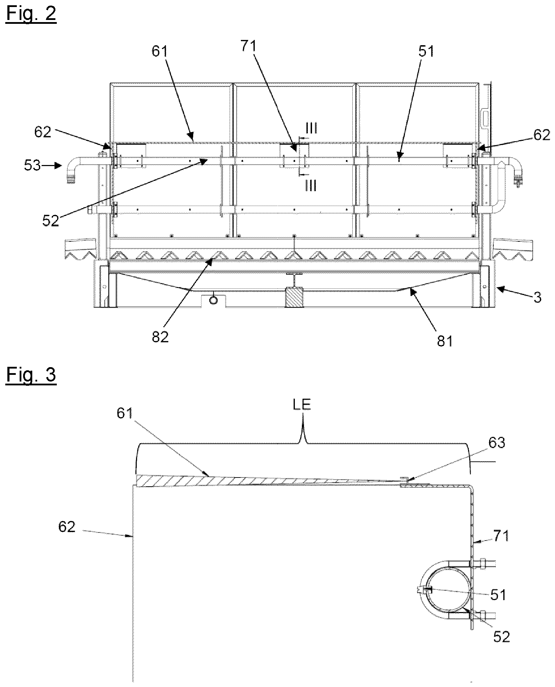

Selon le présent mode de réalisation, les parois latérales 4 s'étendent en longueur sur toute la longueur du fond 3, tel que cela est visible sur la figure 2.

Tel que cela paraît sur la figure 1, les parois latérales 4 s'étendent chacune orthogonalement, ou essentiellement orthogonalement à la surface de roulement présentée par le fond 3.

Cette position assumée par les parois latérales 4 correspond à une position d'utilisation de l'installation 1.

Ces parois latérales 4 sont avantageusement pleines, c'est-à-dire non-ajourées.

Tel que cela est représenté partiellement sur la figure 2, l'installation 1 comprend également une rampe d'accès et une rampe de sortie de l'installation 1.

Selon le présent mode de réalisation l'installation 1 est transportable.

Aussi, chacune de des rampes est montée articulée sur le fond 3. Ceci permet d'adapter l'angle de la rampe au relief du sol sur lequel repose l'installation 1. Ces rampes permettent un véhicule 2 de monter sur le fond puis d'en descendre. Ceci permet également de plier, ou de ranger, les rampes sur le fond 3 lors d'un déplacement de l'installation 1.

Alternativement, les rampes peuvent être montées amovibles sur le fond 3.

De plus, le fond 3 est autoportant. Le fond 3 peut être pourvu d'un piétement permettant d'adapter et de régler l'horizontalité du fond 3 au relief du sol sur lequel le fonds 3 est positionné.

En outre, les parois latérales 4 peuvent être montées mobiles à rotation sur le fond, entre leur position orthogonale par rapport à la surface de roulement présentée par le fond 3, et au moins une position basculée vers le fond 3. L'installation comprend également des moyens de verrouillage des parois latérales 4 dans leur position orthogonale par rapport à la surface de roulement présentée par le fond 3.

Le repliement des parois latérales 4 sur le fond 3, et le rangement des rampes facilite le déplacement de l'installation 1, qui peut par exemple être déplacée en étant positionnée sur une remorque d'un camion à l'aide d'une grue.

Tel que cela est illustré sur la figure 1, le fond 3 définit un passage au sein du couloir de passage défini entre les parois latérales 4. Ce passage présente une largeur maximale d'empiétement 10 par un véhicule.

En effet, des véhicules qui présenteraient une largeur supérieure à la largeur maximale d'empiétement doivent être considérés comme hors gabarit, et ne doivent pas être montés sur le fond 3.

Pour réaliser le lavage, l'installation 1 comprend en outre des buses de pulvérisation 51 d'un liquide de lavage et/ou de désinfection portées par les deux parois latérales 4 et positionnées pour pulvériser le liquide de lavage et/ou de désinfection en direction du bas de caisse et des roues du véhicule.

Bien entendu, l'installation 1 comprend également des moyens d'alimentation en liquide de lavage et/ou de désinfection des buses de pulvérisation.

Plus précisément, les buses de pulvérisation 51 sont portées par une tuyauterie 52 formant une rampe de pulvérisation 53.

Chaque rampe de pulvérisation s'étend longitudinalement le long d'une paroi latérale 4 qui la porte, et en hauteur sur la paroi latérale.

La tuyauterie 52 présente au moins un embout de connexion permettant son raccord fluidique aux moyens d'alimentation en liquide de lavage et/ou de désinfection.

Les moyens d'alimentation peuvent être formés par une source en eau, par exemple une citerne ou un réseau d'alimentation en eau, associée à une pompe conçue pour mettre en pression l'eau, ainsi qu'à un mélangeur conçu pour permettre l'adjonction d'un produit de lavage et/ou de désinfection.

En référence aux figures 1 à 3, chaque paroi latérale 4 porte des carters dont :
- un carter supérieur 61 ;
- deux carters d'extrémité 62.

Ces carters sont bien entendu portés sur une face des parois latérales 4 orientée vers le passage.

Le carter supérieur 61 surplombe de façon continue les buses de pulvérisation 51 et s'étendant en hauteur au voisinage de celles-ci.

Selon le présent mode de réalisation, chaque paroi latérale 4 présente deux séries de buses de pulvérisation 51 s'étendant longitudinalement le long de la paroi latérale 4, et avec une série, dite série supérieure, s'étendant au-dessus de l'autre série, dite série inférieure. Dans ce cas, le carter supérieur 61 s'étend en hauteur au voisinage de la série supérieure de buses de pulvérisation 51.

Préférentiellement, le carter supérieure 61 s'étend sur toute la longueur de la paroi latérale 4 qui le porte.

Les carters d'extrémité 62 s'étendent chacun vers le bas à partir d'une extrémité du carter supérieur. En d'autres termes, les deux carters d'extrémité 62 et le carter supérieur 61 portés par une paroi latérale 4 forment un U inversé sur la face interne de la paroi latérale 4, tel que cela est visible sur la figure 4.

En référence aux figures 1 à 3, les carters s'étendent en largeur orthogonalement à la paroi latérale 4.

Selon le présent mode de réalisation les carters sont montés fixes par rapport aux parois latérales 4.

Toutefois, il est envisageable que les carters soient montés mobiles sur le parois latérales 4, entre une position d'utilisation qui correspondrait à la position qu'ils assument sur les figures 1 à 3 et une position de rangement dans laquelle les carters ne feraient pas ou peu saillie par rapport aux parois latérales 4.

En référence aux figures 1 et 3 :
- le couloir de passage présente :
   ∘ une largeur d'une valeur LP ;
   ∘ une largeur maximale d'empiétement par un véhicule d'une valeur LME ;
- les carters présentent chacun une largeur d'élongation d'une valeur LE ; et le rapport suivant est respecté : LME+2×LE ≥ LP.

Selon le présent mode de réalisation, au moins l'extrémité distale des carters, destinée à s'approcher ou à toucher le véhicule, est en matériau déformable. Dans ce cas, au moins l'extrémité distale des carters prend la forme de brosses. Ceci permet d'établir une liaison au moins partiellement étanche au niveau du carter avec un véhicule qui viendrait en contact avec le carter.

Selon le présent mode de réalisation, l'ensemble des carters est en matériau déformable.

Aussi, l'ensemble des carters sont formés par des brosses.

Par brosse, il est entendu un regroupement de poils de longueur sensiblement identique, maintenus ensemble selon au moins une orientation prédéfinie.

Par exemple, les brosses peuvent être formés de poils en plastique souple, ou en caoutchouc.

Les poils des brosses sont maintenus ensemble en étant enchâssés dans un élément longitudinal 63. L'élément longitudinal peut être un profilé métallique serti sur les poils. L'élément longitudinal peut également correspondre à un bloc surmoulé sur l'extrémité proximale des poils.

Il est envisageable que les carters soient formés au moins partiellement par d'autres types de matériaux tel qu'une membrane souple, par exemple en caoutchouc.

Selon un mode de réalisation hybride envisageable, l'extrémité distale des carters peut être formée par une brosse tandis qu'un partie proximale est formée par une membrane souple en caoutchouc.

En référence aux figures 2 et 3, la fixation des carters est décrite ci-après.

Selon le présent mode de réalisation, les carters sont couplés à la tuyauterie 52.

En effet, les carters sont solidaires d'une pluralité de platine de fixation 71 adoptant un profil en L tel que cela est visible sur la figure 3. Cette platine de fixation est par exemple métallique.

La platine de fixation présente une partie droite destinée à s'étendre parallèlement à la paroi latérale 4, et une partie pliée portant à son extrémité distale l'un des carters, en l'occurrence le carter supérieur 61. La partie droite de la platine de fixation est couplée à la tuyauterie par l'intermédiaire de brides venant entourer partiellement la tuyauterie.

De cette manière, les carters sont maintenus en position par rapport aux buses de pulvérisation 51 présentées par la tuyauterie 52.

Tel qu'évoqué précédemment, il envisageable que les carters soient montés mobiles sur les parois latérales 4. Ce montage mobile peut par exemple prendre la forme d'une charnière à l'interface entre la partie droite et la partie pliée de la platine de fixation.

L'utilisation de l'installation 1 est décrite ci-après.

Dans un premier temps, l'installation est mise en position d'utilisation. Ceci est réalisé en déposant le fond sur un sol, en déployant les rampes d'accès et de sortie, puis en positionnant les parois latérales 4 dans leur position orthogonale par rapport à la surface de roulement présentée par le fond 3.

Un véhicule peut à présent monter sur le fond 3 à l'aide de la rampe d'accès.

Le véhicule, par exemple un tracteur routier, doit se positionner de manière sensiblement centrée dans le couloir de passage délimité par les parois latérales 4.

Si le véhicule présente une largeur égale à la largeur maximale d'empiétement, alors les carters viennent au moins effleurer le véhicule s'ils présentent leur largeur d'élongation minimale.

Les buses de pulvérisation peuvent alors être alimentées en liquide de lavage et/ou de désinfection. Grâce au confinement au moins partiel permis par les carters, les particules de liquide en suspension tendent à être mieux collectées et évacuées, et ainsi à ne pas créer un mur de brume.

## Revendications

1. Installation (1) de lavage et/ou de désinfection d'un bas de caisse et des roues d'un véhicule (2), en particulier d'un camion, comprenant :
- deux parois latérales (4) délimitant un couloir de passage du véhicule ;
- des buses de pulvérisation (61) d'un liquide de lavage et/ou de désinfection portées par les deux parois latérales (4) et positionnées pour pulvériser le liquide de lavage et/ou de désinfection en direction du bas de caisse et des roues du véhicule,
- un fond (3) à partir duquel s'étendent les deux parois latérales (4), pourvu d'un système de récupération du liquide de lavage et/ou de désinfection,
**caractérisée en ce que** chaque paroi latérale (4) porte :
- un carter supérieur (61) surplombant de façon continue les buses de pulvérisation et s'étendant en hauteur au voisinage de celles-ci,
- deux carters d'extrémité (62), chacun s'étendant vers le bas à partir d'une extrémité du carter supérieur (61),
et **en ce qu'**au moins l'extrémité distale des carters, destinée à s'approcher ou à toucher le véhicule (2), est en matériau déformable.

2. Installation (1) selon la revendication précédente, **caractérisée en ce que** le couloir de passage présente une largeur d'une valeur LP, et une largeur maximale d'empiétement par un véhicule d'une valeur LME, et **en ce que** les carters présentent une largeur d'élongation d'une valeur LE,
avec LME+2×LE ≥ LP.

3. Installation (1) selon l'une quelconque des revendications précédentes, **caractérisée en ce que** l'ensemble des carters est en matériau déformable.

4. Installation (1) selon l'une quelconque des revendications précédentes, **caractérisée en ce qu'**au moins une partie des carters prend la forme de brosses.

5. Installation (1) selon l'une quelconque des revendications précédentes, **caractérisée en ce que** le système de récupération comprend au moins un réceptacle (81) surmonté par au moins un caillebotis (82).

6. Installation (1) selon la revendication précédente, **caractérisée en ce que** le système de récupération comprend au moins deux réceptacles (81) prenant la forme d'une goulotte s'étendant longitudinalement sous une trajectoire de roue présentée par le fond (3).

7. Installation (1) selon l'une quelconque des revendications précédentes, **caractérisée en ce qu'**elle est transportable.
